# FASCICULE DE BREVET EUROPEEN

(11) **EP 0 493 160 B1**
(45) Date de publication et mention de la délivrance du brevet: **24.04.1996**
(21) Numéro de dépôt: 91403295.8
(22) Date de dépôt: 05.12.1991
(51) Int. Cl.: B29C 45/46

(54) **Installation pour l'injection de matière composite**
Anlage zum Spritzgiessen von Verbundwerkstoff
Installation for the injecton of composite material

(30) Priorité: 12.12.1990 FR 9015549
(43) Date de publication de la demande: 01.07.1992
(73) Titulaire: LVD Company NV, B-8630 Gullegem (BE)
(72) Inventeur: Maertens, Ward, B-8550 Zwevegem (BE)
(74) Mandataire: Kopacz, William James

(56) Documents cités:
- FR-A- 2 296 514
- FR-A- 2 629 388
- US-A- 3 779 067
- PLASTICS ENGINEERING vol. 32, no. 7, Juillet 1976, GREENWICH(US) pages 25 - 26; 'Precatalyzed LRM system promises lower cost encapsulation'

## Description

La présente invention concerne une installation pour l'injection de matière composite, de préférence de matière composite, dans une empreinte de moulage.

On connait dans l'art antérieur des installations pour l'injection de matières composites constituées par une combinaison monolithique de plusieurs dispositifs, notamment un dispositif de d'alimentation, un dispositif de dosage et un dispositif d'injection.

Une telle installation est en particulier décrite dans la demande de brevet française n° 88 04 564 déposée le 31 mars 1988. L'installation décrite permet, comme toutes les installations de l'état de la technique, d'injecter la matière en un endroit déterminé et fixe de l'installation. En conséquence, l'utilisateur est tenu de concevoir l'empreinte de moulage en tenant compte de la position du - ou éventuellement des- orifices d'injection, positions qui lui sont imposées par la structure de l'installation.

De ce fait, il est difficile d'optimiser l'empreinte de moulage en fonction de la forme de la pièce à mouler et de la répartition des contraintes mécaniques qui s'exerceront sur ladite pièce. L'utilisateur est ainsi souvent amené à choisir un mauvais compromis tenant compte des contraintes qui lui sont imposées par l'installation d'injection. Ce compromis se traduit d'ailleurs souvent par des solutions couteuses en matière injectée, car le concepteur de l'empreinte de moulage prévoit parfois, pour permettre l'arrivée de la matière à injecter dans les parties adéquates du moule, des canaux d'un volume non négligeable, qui devront être détachés de la pièce moulée.

Pour remédier à cet inconvénient, la présente invention vise la réalisation d'une installation d'injection modulaire. L'utilisateur peut ainsi concevoir l'empreinte de moulage de façon optimale, en tenant compte en premier lieu de la forme de la pièce à réaliser et des contraintes mécaniques qu'elle subira, et adapter ensuite l'installation à l'empreinte ainsi conçue.

La présente invention concerne plus particulièrement une installation pour l'injection de matière composite dans une empreinte de moulage comprenant:
- au moins un module autonome de bourrage constitué par un cylindre présentant un orifice de chargement de la matière composite et un orifice axial d'expulsion, ledit cylindre étant muni d'un piston mû axialement par un vérin,
- au moins un module autonome de dosage constitué par un corps muni d'un alésage cylindrique dans lequel un piston est mobile axialement, ledit alésage présentant un orifice axial de sortie muni d'une vanne d'obturation et un orifice de remplissage muni d'une vanne d'obturation,
- au moins un module autonome d'injection apte à coopérer avec un orifice d'alimentation de l'empreinte de moulage en un endroit quelconque, ledit module d'injection étant constitué par un corps présentant un alésage cylindrique obturable par une aiguille,
lesdits modules étant reliés entre eux par des conduits de section suffisante pour que les pertes en charge n'excèdent pas 500 bars.

L'installation selon l'invention peut comporter un ou plusieurs modules de dosage et/ou un ou plusieurs modules de bourrage, ce qui permet pour certaines applications de multiplier les zones d'injection de matière composite dans l'empreinte de moulage, voire d'injecter en différents emplacements, ou au même emplacement mais à un stade différents, des matières différentes, par exemple des matières composites dont la concentration de fibres varie en fonction des contraintes mécaniques que la pièce devra supporter.

De préférence, certains au moins des conduits, en particulier ceux reliant un module d'injection à un module de dosage, sont constitués par des flexibles. Ce mode de réalisation permet d'adapter l'installation de façon particulièrement simple et rapide à une nouvelle empreinte de moulage. Les flexibles sont par exemple du type constitué par une âme formée d'une ou de plusieurs nappes d'acier tressé et de caoutchouc.

Selon un mode de réalisation avantageux, le module de bourrage est constitué par un cylindre vertical prolongé à sa partie inférieure par une embase présentant un alésage conique s'ouvrant sur l'orifice d'expulsion, la génératrice de la partie terminale de l'alésage conique formant un angle non nul avec l'axe longitudinal. La valeur optimale de cet angle est comprise entre 5 et 9 degrés, de préférence 7 degrés. La réalisation d'une presse de bourrage verticale permet de réduire notablement l'encombrement au sol et donc de diminuer les surfaces nécessaires pour l'installation d'une usine, ou d'augmenter le nombre d'installations de moulage pouvant être mise en oeuvre dans un site donné. L'angle d'environ 7 degré des parois de l'embase conique permet par ailleurs d'optimiser l'écoulement de la matière à injecter et de réduire partiellement les pertes de charge.

Avantageusement, la partie supérieure du module de bourrage est obturable par un couvercle susceptible de basculer autour d'un axe tangentiel, ledit couvercle supportant le vérin. Ce mode de réalisation permet de faciliter le chargement du module de bourrage tout en lui confèrant une grande robustesse.

De préférence, le raccordement entre deux tronçons de sections différentes se fait par une partie conique dont les parois intérieures forment un angle non nul avec l'axe médian. La valeur optimale de cet angle est comprise entre 5 et 9 degrés, de préférence 7 degrés. Comme pour l'embase du module de bourrage, l'angle d'environ 7 degrés permet de réduire les turbulences et donc de diminuer les pertes en charges.

Selon un mode de réalisation avantageux, le module de dosage est constitué par un corps présentant un premier alésage d'un volume au moins égal au volume de la matière composite à injecter, ledit premier alésage comportant un piston actionné par un vérin, ledit corps comportant en outre un deuxième alésage d'alimentation dont l'axe médian forme un angle différent de 180 degrés avec l'axe du premier alésage. La valeur optimale de cet angle est comprise entre 160 et 170 degrés, de préférence 165 degrés, le raccordement entre les deux alésages s'effectuant entre l'orifice de sortie et la tête du piston.

Avantageusement, ledit module de dosage comporte un vanne constituée par un troisième alésage de section inférieure à la section dudit premier alésage et égale à la section dudit deuxième alésage, ledit troisième alésage intersectant le premier alésage et le deuxième alésage et par une aiguille de section sensiblement identique à la section dudit troisième alésage, ladite aiguille étant actionnée par un vérin entre une position dans laquelle la tête de l'aiguille est disposée en arrière des premier et deuxième alésages et une position dans laquelle elle obture les premier et deuxième alésage.

Selon un autre mode de réalisation avantageux, le module d'injection est constitué par un corps muni d'un premier alésage axial et d'un deuxième alésage dont l'axe forme avec l'axe du premier alésage un angle non nul. La valeur optimale de cet angle est comprise entre 10 et 20 degrés, de préférence 15 degrés. Le premier alésage comportant une aiguille mobile entre une position d'alimentation dans laquelle la tête est en arrière du tronçon compris entre l'orifice d'injection et la zone de jonction des deux alésages, et une position d'obturation dans laquelle ladite tête remplit la plus grande partie dudit tronçon.

Avantageusement, le dispositif d'injection comporte un circuit de thermorégulation de l'aiguille. Ce circuit de thermorégulation permet par exemple de refroidir ladite aiguille à une température de l'ordre de 40 degrés Celsius empèchant ainsi la polymérisation de l'excédent de matière composite dans le conduit d'injection et évitant la formation d'une carotte.

Elon un mode de mise en oeuvre particulier de l'invention, l'installation pour l'injection de matière composite comporte une pluralité de modules de bourrage, chacun des dits modules de bourrage étant alimenté avec un matériau composite distinct. Ce mode de mise en oeuvre permet de faire de l'injection multimatière dans une empreinte de moulage unique.

L'invention sera mieux comprise à la lecture de la description d'un exemple non limitatif de réalisation qui suit, et des dessins où:
- la figure 1 représente une vue en coupe médiane du module de bourrage
- la figure 2 représente une vue en coupe médiane du module de dosage
- le figure 3 représente une vue en coupe médiane du module d'injection.

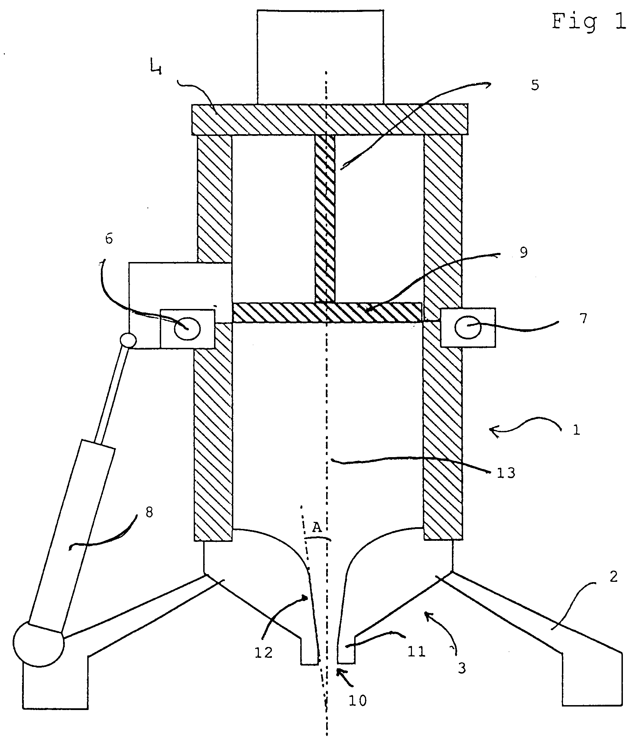

La figure 1 représente une vue en coupe médiane du module de bourrage. Il comporte un corps cylindrique 1 supporté par un bati 2. Le corps cylindrique 1 est disposé verticalement. A sa partie inférieure, il coopère avec une embase conique 3. La partie supérieure coopère avec un couvercle 4 supportant le vérin hydraulique 5. Le couvercle 4 bascule autour d'un axe de pivotement 6 tangentiel au corps cylindrique 1. Le couvercle 4 peut être bloqué en position fermée par un verrou 7 formé par une tige mobile disposée symétriquement à l'axe de pivotement 6 par rapport à un plan médian. Afin de faciliter le basculement du couvercle 4 en vue du chargement de la matière composite dans le corps cylindrique 1, le couvercle 4 est actionné par un vérin d'assistance 8 dont le corps est solidaire de la partie inférieure du corps cylindrique 1 ou du chassis 2.

Le piston intérieur 9 est mobile à l'intérieur du corps cylindrique 1 lorsque le couvercle 4 est fermé et verrouillé. Il est actionné par un vérin exerçant une pression limitée à environ 400 bars. Il comporte des capteurs de pression et de position associés à des circuits de surveillance et d'alarme non représentés sur les dessins annexés.

La matière composite est éjectée par un orifice d'expulsion 10 disposé à l'extrémité d'une embase conique 3. Cette embase conique présente un alésage se raccordant à sa partie supérieure à l'alésage du corps cylindrique 1, et présentant à sa partie inférieure des parois cylindriques 12 formant avec l'axe longitudinal 13 un angle A de 7 degrés.

Le raccordement du module de bourrage à un ou plusieurs modules de dosage s'effectue par des conduits flexibles ou par des conduits rigides. Dans l'exemple décrit, le raccordement du module de bourrage avec les modules de dosage se fait à l'aide de conduits rigides d'un diamètre intérieur de 80 mm, les flexibles étant utilisés pour le raccordement des modules de dosage avec les modules d'injection.

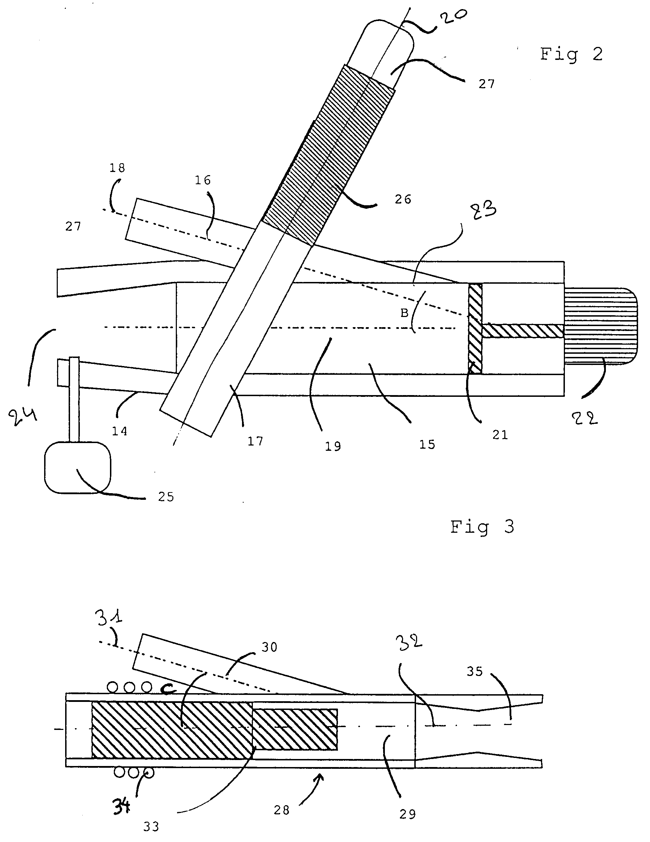

La figure 2 représente une vue en coupe médiane d'un module de dosage. Il est constitué par un corps 14 comportant un premier alésage 15 longitudinal, un second alésage 16 et un troisième alésage 17. L'axe de symétrie 19 du deuxième alésage 16 forme avec l'axe de symétrie 18 du premier alésage un angle B d'environ 165 degrés.

Le premier alésage 15 est muni d'un piston 21 actionné par un vérin 22. Un capteur de position non représenté sur les dessins permet à tout moment de connaître la position du piston 21. La matière composite provenant du module de bourrage est introduit dans le module de dosage par l'orifice d'introduction axial 23 formé par l'extrémité du second alésage 16. La matière composite expulsée par l'orifice de sortie 24 situé à l'extrémité axiale du premier alésage 15. Un capteur de pression 25 permet de connaître à tout moment la pression de la matière composite contenue dans le module de dosage.

Une vanne permet de contrôler l'arrivée et la sortie de matière composite. Cette vanne est formée par le troisième alésage 17 d'une section inférieure à la section du premier alésage 15 et égale à la section du second alésage 16, et muni d'une aiguille mobile 26 commandée par un vérin. L'axe de symétrie 20 du troisième alésage 17 est sensiblement perpendiculaire à la parois du premier alésage 15 à la hauteur de l'intersection avec l'alésage 17.

La figure 3 représente une vue en coupe médiane d'un module d'injection. Ce module est constitué par un corps 28 présentant un alésage principal 29 communiquant avec un alésage d'alimentation 30 dont l'axe de symétrie 31 forme avec l'axe de symétrie 32 de l'alésage principal 29 un angle C d'environ 15 degrés.

L'alésage principal 29 comporte une aiguille 33 mobile axialement sous l'action d'un vérin non représenté. Un circuit de thermorégulation formé par un conduit 34 entoure l'aiguille 33 et permet la circulation d'un fluide maintenu à une température empêchant la polymérisation de la matière composite, par exemple à une température de l'ordre de 40 à 50 degrés Celsuis. Cette aiguille à une double fonction : d'une part, elle permet de commander l'arrivée de la matière composite provenant du module de dosage, et d'autre part elle permet d'empêcher la formation d'une carotte de matière polymérisée à l'intérieure de l'alésage principal 29. De ce fait, on évite l'introduction dans l'empreinte de moulage de matière prépolymérisée créant des inhomogéneités dans la pièce moulée.

Le raccordement avec l'empreinte de moulage se fait par l'intermédiaire d'un tronçon à alésage conique 35 permettant de créer une zone de rupture facilitant la séparation de la matière polymérisée de la pièce moulée et de la matière non polymérisée contenue dans le module d'injection. Les modules d'injection sont reliés à un ou plusieurs modules de dosage par des flexibles ou par des tubes rigides, et sont disposées soit sur la matrice, soit sur le poinceau de l'empreinte de moulage.

Le fonctionnement de l'installation suivant l'exemple décrit est le suivant:
Dans un premier temps, on procède à l'alimentation des modules de dosages en remplissant soit simultanément, soit de préférence successivement, chacun des modules de dosages à l'aide du module de bourrage.

Ce remplissage se fait de préférence en exerçant un force de résistance sur le vérin agissant sur le piston du module de dosage. Cette force de résistance correspond à la pression de compactage de la matière composite avant remplissage de l'empreinte de moulage. La vanne d'alimentation du module de dosage reste ouverte jusqu'à ce que les deux conditions suivantes soient simultanément vérifiées:
1) la pression de la matière contenue dans le module de dosage correspond à la pression de compactage prédéfinie
2) le recul du piston correspond à un volume de matière à injecter prédéfini.

Si le recul du piston est insuffisant, on réitère le remplissage de façon à complèter l'alimentation en matière à injecter. Le recul du piston est consiédré comme insuffisant si le produit de la longueur du recul par la section du module de dosage est inférieur au volume de l'empreinte de moulage. Ces vérifications se font de façon connue par des moyens mécaniques ou électronique.

Le remplissage de chacun des modules de dosages peut se faire à un moment quelconque du cycle, puisque chacun des modules de dosage peut être isolé indépendamment du circuit de matière composite. Il est ainsi possible d'optimiser le cycle de fonctionnement global de l'installation globale de façon plus satisfaisante que lorsque les moyens de dosage doivent obligatoirement travailler en parallèle.

Après le remplissage d'un module de dosage, la position du piston est mémorisée, et la force de résistance exercée par le vérin est supprimée, afin d'éviter de maintenir inutilement les circuits hydrauliques sous pression. Les moyens de mémorisation de la position du piston sont soit mécanique, soit électronique. Dans ce dernier cas, ils exploitent les signaux générées par les capteurs de position ou de déplacement. La vanne d'admission est alors fermée.

Lorsque les différents modules de dosages sont remplis, ils sont mis en communication avec les modules d'injection par ouverture des vannes correspondantes. Le piston de chacun des modules de dosage est alors déplacé d'une longueur prédéfinie comptée à partir de la position précédemment mémorisée. Cette longueur peut être ajustée pour chacun des modules de dosages de façon à ce que les flux de matière injectée dans l'empreinte de moulage se rejoignent en des zones appropriées.

Après injection, l'aiguille du module d'injection vient obturer l'alésage principal, et la pièce moulée peut être extraite de l'empreinte de moulage, après polymérisation. L'installation est alors prête pour un nouveau cycle.

Selon une variante, chacun des modules de dosages est rempli de matière provenant d'un module de bourrage en l'absence de force exercée sur le piston. Lorsque le premier alésage est rempli et que le piston est en position reculée, les orifices d'alimentation et d'expulsion sont obturés par les vannes respectives et une pression de compactage est exercée à l'aide du vérin actionnant le piston. Lorsque le pression de la matière contenue dans le module de dosage a atteint une valeur prédéfinie, la position du piston est mémorisée, et la force de compactage est supprimée. Au moment de l'injection, le piston est déplacée d'une longueur correspondant au volume à injecter, longueur comptée à partir de la position précédemment mémorisée.

La présente invention a été exposée dans ce qui précède à titre d'exemple non limitatif et il est bien entendu qu'elle s'étend à toutes les variantes.

## Revendications

1. Installation pour l'injection de matière composite dans une empreinte de moulage du type comprenant :
- au moins un module de bourrage constitué par un corps cylindrique (1) présentant un orifice de chargement de la matière composite et un orifice axial d'expulsion, ledit corps cylindrique (1) étant muni d'un piston (1) mû axialement par un vérin (5),
- au moins un module de dosage constitué par un corps muni d'un alésage cylindrique (15) dans lequel un alésage cylindrique (15) dans lequel un piston (21) est mobile axialement, ledit alésage (15) présentant un orifice axial de sortie,
- au moins un module d'injection apte à coopérer avec un orifice d'alimentation disposé en un endroit quelconque de l'empreinte de moulage, ledit module d'injection étant constitué par un corps présentant un alésage cylindrique (29) obturable par une aiguille (33),
caractérisé en ce que
chacun des modules de dosage comporte une vanne d'obturation apte à contrôler de manière ajustable le débit de matière entre le module de bourrage et les modules de dosage, en ce que qu'elle comporte des moyens pour commander de manière indépendante chacune desdites vannes et en ce que lesdits modules de dosage sont reliés au module de bourrage par des conduits de section suffisante pour que les pertes en charges n'excèdent pas 500 bars.

2. Installation pour l'injection de matière composite dans une empreinte de moulage selon la revendication 1 caractérisé en ce que certains au moins des conduits sont constitués par des flexibles.

3. Installation pour l'injection de matière composite dans une empreinte de moulage selon l'une quelconque des revendications 1 à 2 caractérisé en ce que le module de bourrage est constitué par un cylindre vertical prolongé à sa partie inférieure par une embase (3) présentant un alésage conique s'ouvrant sur l'orifice d'expulsion (10), la génératrice de la partie terminale de l'alésage conique formant avec l'axe longitudinal (13) un angle non nul, la valeur optimale de cet angle étant comprise entre 5 et 9 degrés, de préférence 7 degrés.

4. Installation pour l'injection de matière composite dans une empreinte de moulage selon la revendication 3 caractérisée en ce que la partie supérieure du module de bourrage est obturable par un couvercle (4) susceptible de basculer autour d'un axe tangentiel (6), ledit couvercle (4) supportant le vérin (5).

5. Installation pour l'injection de matière composite dans une empreinte de moulage selon l'une quelconque des revendications 1 à 4 caractérisé en ce que le raccordement entre deux tronçons de sections différentes se fait par une partie conique dont les parois intérieures forment avec l'axe médian un angle non nul, la valeur optimale de cet angle étant comprise entre 5 et 9 degrés, de préférence 7 degrés.

6. Installation pour l'injection de matière composite dans une empreinte de moulage selon l'une quelconque des revendications 1 à 5 caractérisé en ce que le module de dosage est constitué par un corps présentant un premier alésage (15) d'un volume au moins égal au volume de la matière composite à injecter, ledit premier alésage (15) comportant un piston (21) actionné par un vérin, ledit corps comportant en outre un deuxième alésage d'alimentation (16) dont l'axe médian (18) forme avec l'axe de symétrie (19) du premier alésage (15) un angle compris entre 160 et 170 degrés, de préférence 165 degrés, le raccordement entre les deux alésages s'effectuant entre l'orifice de sortie et la tête du piston.

7. Installation pour l'injection de matière composite dans une empreinte de moulage selon la revendication 6 caractérisée en ce que ledit module de dosage comporte un vanne constituée par un troisième alésage (17) intersectant le premier alésage (15) et le deuxième alésage (16), ledit troisième alésage (17) étant muni d'une aiguille (26) de section sensiblement identique à la section dudit troisième alésage (17), ladite aiguille (26) étant actionnée par un vérin (27) entre une position dans laquelle la tête de l'aiguille (26) est disposée en arrière des premier et deuxième alésages et une position dans laquelle elle obture les premier et deuxième alésages.

8. Installation pour l'injection de matière composite dans une empreinte de moulage selon la revendication 7 caractérisé en ce que le dispositif de dosage comporte un capteur de position de la tête du vérin et un capteur de pression de la matière composite.

9. Installation pour l'injection de matière composite dans une empreinte de moulage selon l'une quelconque des revendications 6 à 8 caractérisé en ce que le dispositif de dosage comporte des moyens pour exercer une force de résistance prédéterminée sur le piston pendant la phase de remplissage dudit module de dosage.

10. Installation pour l'injection de matière composite dans une empreinte de moulage selon l'une quelconque des revendications 1 à 9 caractérisé en ce que le module d'injection est constitué par un corps muni d'un premier alésage axial (29) et d'un deuxième alésage (30) dont l'axe forme avec l'axe du premier alésage (29) un angle compris entre 10 et 20 degrés, de préférence 15 degrés, ledit premier alésage (29) comportant une aiguille (33) mobile entre une position d'alimentation dans laquelle la tête est en arrière du tronçon compris entre l'orifice d'injection et la zone de jonction des deux alésages, et une position d'obturation dans laquelle elle remplit la plus grande partie dudit tronçon.

11. Installation pour l'injection de matière composite dans une empreinte de moulage selon la revendication 10 caractérisé en ce que le dispositif d'injection comporte un circuit de thermorégulation de l'aiguille (33).

12. Installation pour l'injection de matière composite dans une empreinte de moulage selon l'une quelconque des revendications 1 à 11 caractérisé en ce qu'elle comporte une pluralité de modules de bourrage, chacun des dits modules de bourrage étant alimenté avec un matériau composite distinct.

## Claims

1. An equipment for injecting a compost material into a moulding cavity of the type including :
- at least a filling-up module comprising a cylindrical body (1) having an orifice for charging said composite material and an expulsion axial orifice, said cylindrical body (1) being provided with a piston (9) axially moved by a jack (5),
- at least a metering module comprising a body with a cylindrical bore (15) wherein a piston (21) is axially movable, said bore (15) having an output axial orifice,
- at least an injection module apt to cooperate with a feeding orifice arranged at any place of the moulding cavity, said injection module comprising a body having a cylindrical bore (29) which can be sealed by a needle (33),
characterised in that
every one of said metering modules includes a closing valve apt to adjustably control the material flow between said filling-up module and said metering modules, in that it is provided with control means for independently controlling each of said valves and in that said metering modules are connected to said filling-up module by conduits with a sufficient section so that lead losses do not exceed 500 bars.

2. The equipment for injecting a composite material into a moulding cavity as recited in claim 1, characterised in that some at least of said conduits comprise hoses.

3. The equipment for injecting a composite material into a moulding cavity as recited in claim 1 or claim 2, characterised in that said filling-up module comprises a vertical cylinder which is extended at a lower portion thereof by a base (3) having a conical bore which opens into said expulsion orifice (10), with the genratrix of said conical bore end portion forming a non-zero angle with longitudinal axle (13), the optimal value of such an angle being comprised between 5 and 9 degrees, preferably of 7 degrees.

4. The equipment for injecting a composite material into a moulding cavity as recited in claim 3, characterised in that the upper portion of said filling-up module can be sealed by a lid (4) subject to a swinging movement about a tangential axle (6), with said lid (4) carrying said jack (5).

5. The equipment for injecting a composite material into a moulding cavity as recited in any claim 1-4, characterised in that the junction between two lengths of different sections is done through a conical portion, the internal walls of which meet the medial axle at a non-zero angle, with the optimal value of said angle being from 5 to 9 degrees, preferably of 7 degrees.

6. The equipment for injecting a composite material into a moulding cavity as recited in any claim 1-5, characterised in that said metering module includes a body having a first bore (15) with a volume at least equal to that of the composite material to be injected, said first bore (15) including a jack-actuated piston (21), said body further including a second supply bore (16), the medial axle of which meets the symmetry axle (19) of said first bore (15) at an angle from 160 to 170 degrees, preferably of 165 degrees, with the junction between both bores being done between the output orifice and the piston head.

7. The equipment for injecting a composite material into a moulding cavity as recited in claim 6, characterised in that said metering module includes a valve formed of a third bore (17) intersecting both first bore (15) and second bore (16), said third bore (17) being provided with a needle (26) of a section substantially identical to that of said third bore (17), with said needle (26) being actuated by a jack (27) between a position in which needle (26) head is disposed behind said first and second bores and a position in which it seals said first and second bores.

8. The equipment for injecting a composite material into a moulding cavity as recited in claim 7, characterised in that the metering device includes a position sensor for detecting the position of said jack head and a pressure sensor for detecting the composite material pressure.

9. The equipment for injecting a composite material into a moulding cavity as recited in any claim 6-8, characterised in that said metering device includes means for exerting a predetermined resistance force upon said piston during the filling period of said metering module.

10. The equipment for injecting a composite material into a moulding cavity as recited in any claim 1-9, characterised in that said injection module includes a body provided with a first axial bore (29) and a second bore (30), the axle of which meets said first bore (29) axle at an angle from 10 to 20 degrees, preferably of 15 degrees, said first bore (29) comprising a needle (33) which can move between a supply position in which the head thereof is behind the length between the injection orifice and the two bore junction area, and sealing position in which it fills the greatest part of said length.

11. The equipment for injecting a composite material into a moulding cavity as recited in claim 10, characterised in that the injection device includes a thermoregulation circuit for thermoregulating said needle (33).

12. The equipment for injecting a composite material into a moulding cavity as recited in any claim 1 11, characterised in that it includes a plurality of filling-up modules, each of said filling-up modules being supplied with a distinct composite material.

## Patentansprüche

1. Anlage zum Spritzgießen von Verbundwerkstoff in einem Gußformhohlraum, von der Art mit:
- mindestens einem Füllmodul, bestehend aus einem zylindrischen Körper (1), der eine Öffnung zum Einfüllen des Verbundwerkstoffs und eine axiale Ausstoßöffnung aufweist, wobei der zylindrische Körper (1) mit einem Kolben (1) versehen ist, der axial von einem Zylinder (5) bewegt wird,
- mindestens einem Dosiermodul, bestehend aus einem Körper, der mit einer zylindrischen Bohrung (15) versehen ist, in welcher ein Kolben (21) axial beweglich ist, wobei die Bohrung (15) eine axiale Austrittsöffnung aufweist,
- mindestens einem Spritzmodul, der mit einer Beschickungsöffnung zusammenwirken kann, die an einem beliebigen Ort des Güßformhohlraumes angeordnet ist, wobei der Spritzmodul aus einem Körper besteht, der eine zylindrische Bohrung (29) aufweist, die von einer Nadel (33) verschlossen werden kann,
dadurch gekennzeichnet, daß
jeder der Dosiermodule einen Absperrschieber aufweist, der in einstellbarer Weise die Materialdurchflußmenge zwischen dem Füllmodul und den Dosiermodulen kontrollieren kann, daß ein Mittel zur unabhängigen Steuerung jedes einzelnen Schiebers aufweist und daß die Dosiermodule mit dem Füllmodul durch Leitungen verbunden sind, die einen genügend großen Querschnitt besitzen, damit die Druckverluste 500 bar nicht überschreiten.

2. Anlage zum Spritzgießen von Verbundwerkstoff in einem Gußformhohlraum nach Anspruch 1, dadurch gekennzeichnet, daß mindestens einige der Leitungen aus Schläuchen bestehen.

3. Anlage zum Spritzgießen von Verbundwerkstoff in einem Gußformhohlraum nach irgendeinem der Ansprüche 1 bis 2, dadurch gekennzeichnet, daß dar Füllmodul von einem vertikalen Zylinder gebildet wird, der an seinem unteren Teil von einem Sockel (3) fortgesetzt wird, der eine konische Bohrung aufweist, welche sich über der Ausstoßöffnung (10) öffnet, wobei die Mantellinie des Endteils der konischen Bohrung mit der Längsachse (13) einen Winkel ungleich Null bildet, wobei der optimale Wert diesem Winkels zwischen 5 und 9 Grad und vorzugsweise 7 Grad beträgt.

4. Anlage zum Spritzgießen von Verbundwerkstoff in einem Gußformhohlraum nach Anspruch 3, dadurch gekennzeichnet, daß der obere Teil des Füllmoduls durch einen Deckel (4) verschließbar ist, der um eine tangentiale Achse (6) schwenken kann, wobei dieser Deckel (4) den Zylinder (5) trägt.

5. Anlage zum Spritzgießen von Verbundwerkstoff in einem Gußformhohlraum nach irgendeinem der Ansprüche 1 bis 4, dadurch gekennzeichnet, daß die Verbindung zwischen zwei Abschnitten mit verschiedenen Querschnitten durch ein konisches Teilstück erfolgt, dessen Innenwände mit der Mittelachse einen Winkel ungleich Null bilden, wobei der optimale Wert dieses Winkels zwischen 5 und 9 Grad und vorzugsweise 7 Grad beträgt.

6. Anlage zum Spritzgießen von Verbundwerkstoff in einem Gußformhoblraum nach irgendeinem der Ansprüche 1 bis 5, dadurch gekennzeichnet, daß der Dosiermodul von einem Körper gebildet wird, der eine erste Bohrung (15) mit einem Volumen aufweist, das mindestens dem Volumen des zu spritzenden Verbundwerkstoffs entspricht, wobei diese erste Bohrung (15) einen Kolben (21) enthält, der von einem Zylinder betätigt wird, wobei der genannte Körper außerdem eine zweite Bohrung zur Beschickung (16) aufweist, deren Mittelachse (18) mit der Symmetrieachse (19) der ersten Bohrung (15) einen Winkel zwischen 160 und 170 Grad und vorzugsweise von 165 Grad bildet, wobei die Verbindung zwischen den zwei Bohrungen zwischen der Austrittsöffnung und dem Kopf des Kolbens erfolgt.

7. Anlage zum Spritzgießen von Verbundwerkstoff in einem Gußformhohlraum nach Anspruch 6, dadurch gekennzeichnet, daß der Dosiermodul einen Schieher aufweist, der von einer dritten Bohrung (17) gebildet wird, welche die erste Bohrung (15) und die zweite Bohrung (16) schneidet, wobei diese dritte Bohrung (17) mit einer Nadel (26) von im wesentlichen gleichem Querschnitt wie der Querschnitt der dritten Bohrung (17) versehen ist, wobei die Nadel (26) von einem Zylinder (27) zwischen einer Position, in welcher der Kopf der Nadel (26) hinter der ersten und der zweiten Bohrung angeordnet ist, und einer Position, in welcher sie die erste und die zweite Bohrung verschließt, angetrieben wird.

8. Anlage zum Spritsgießen von Verbundwerkstoff in einem Gußformhohlraum nach Anspruch 7, dadurch gekennzeichnet, daß die Dosiervorrichtung einen Lagefühler für die Position des Kopfes des Zylinders und einen Druckfühler für den Druck des Verbundwerkstoffs aufweist.

9. Anlage zum Spritzgießen von Verbundwerkstoff in einem Gußformhohlraum nach irgendeinem der Ansprüche 6 bis 8, dadurch gekennzeichnet, daß die Dosiervorrichtung Mittel zur Ausübung einer vorbestimmten Widerstandgkraft auf den Kolben während der Phase der Füllung des Dosiermoduls aufweist.

10. Anlage zum Spritzgießen von Verbundwerkstoff in einem Gußformhohlraum nach irgendeinem der Ansprüche 1 bis 9, dadurch gekennzeichnet, daß der Spritzmodul von einem Körper gebildet wird, der mit einer ersten axialen Bohrung (29) und mit einer zweiten Bohrung (30) versehen ist, deren Achse mit der Achse der ersten Bohrung (29) einen Winkel zwischen 10 und 20 Grad und vorzugsweise von 15 Grad bildet, wobei die erste Bohrung (29) eine Nadel (33) enthält, die zwischen einer Beschickungsposition, in welcher sich der Kopf hinter dem Abschnitt zwischen der Spritzöffnung und der Verbindungszone der beiden Bohrungen befindet. und einer Verschlußposition, in welcher sie den größten Teil dieses Abschnitts ausfüllt, beweglich ist.

11. Anlage zum Spritzgießen von Vorbundwerkstoff in einem Gußformhohlraum nach Anspruch 10, dadurch gekennzeichnet, daß die Spritzvorrichtung einen Temperaturregelkreis für die Nadel (33) aufweist.

12. Anlage zum Spritzgießen von Verbundwerkstoff in einem Gußformhohlraum nach irgendeinem der Ansprüche 1 bis 11, dadurch gekennzeichnet, daß sie eine Mehrzahl von Füllmodulen aufweist, wobei jeder dieser Füllmodule mit einem unterschiedlichen Verbundwerkstoff beschickt wird.
